# EUROPÄISCHE PATENTANMELDUNG

(11) **EP 4 108 056 A1**
(43) Veröffentlichungstag der Anmeldung: **28.12.2022**
(21) Anmeldenummer: 22184615.7
(22) Anmeldetag: 13.07.2018
(51) Int. Cl.: A01B 69/04, G06Q 50/02

(54) **VERFAHREN ZUR PLANUNG UND STEUERUNG EINER LOGISTISCHEN PROZESSKETTE IN DER AGRARWIRTSCHAFT**

(30) Priorität: 20.09.2017 DE 102017121757
(62) Teilanmeldung aus: 18183307.0
(71) Anmelder: CLAAS E-Systems GmbH, 49201 Dissen (DE)
(72) Erfinder: Steckel, Thilo, 33330 Gütersloh (DE); Deeken, Henning, 49076 Osnabrück (DE); Krampe, Florian, 49525 Lengerich (DE)
(74) Vertreter: CLAAS Gruppe

(57) **Zusammenfassung**

Verfahren zur Planung und Steuerung einer logistischen Prozesskette in der Agrarwirtschaft zumindest ein zentrales Planungssystem (1) und Prozessteilnehmer (2, 3, 4) umfassend und wobei den Prozessteilnehmern (2, 3, 4) jeweils eine Steuerungseinrichtung (7) zugeordnet ist, gekennzeichnet durch folgende Verfahrensschritte:
- Definition eines abstrakten Modells der Prozesskette, wobei die Prozesskette in Teilprozesse untergliedert wird und Teilaufträge (11-16) für die Prozessteilnehmer (2, 3, 4) abgeleitet werden und die Teilaufträge (11-16) von den Prozessteilnehmern (2, 3, 4) in der Steuereinrichtung (7) bearbeitet werden, , wobei jede Steuerungseinrichtung (7) eine Steuerarchitektur (17) umfasst, wobei jede Steuerarchitektur (17) maschinenlesbare semantische Datenmodelle (PM) umfasst und die maschinenlesbaren semantischen Datenmodelle (PM) Prozessschritte (9, 10) und die Prozessteilnehmer (2, 3, 4, 18, 23) der logistischen Prozesskette beschreiben,wobei Regeln zur Klassifizierung von Prozessteilnehmern (2, 3, 4, 18, 23) und durchzuführender Prozessschritte (9, 10) generiert werden und Relationen zwischen einem Prozessschritt (9, 10) und einem Prozessteilnehmer (2, 3, 4, 18, 23) beschrieben werden,
- kontinuierliche Bestimmung und Auswertung von Prozessdaten der Prozessteilnehmer (2, 3, 4, 18, 23), welche zu einer auf dem maschinenlesbaren semantischen Datenmodell (PM) basierenden automatisierten regelbasierenden Inferenz (IM) auf einen durch einen Prozessteilnehmer (2, 3, 4) durchzuführenden abweichenden Prozessschritt verwendet werden.

## Beschreibung

Die vorliegende Erfindung betrifft ein Verfahren zur Planung und Steuerung einer logistischen Prozesskette in der Agrarwirtschaft. Die Teilaufgaben landwirtschaftlicher Prozesse sind zumeist räumlich verteilt und können entsprechend gruppiert und räumlich lokal koordiniert werden. Beispielsweise ist in der Maisernte die Ernte im Feld räumlich getrennt von der Einlagerung in ein Silo, d.h. die Erntestrategie eines Feldhäckslers, sowie alle Überladeprozesse können auch von den Maschinen im Feld koordiniert werden ohne den Weg über ein zentrales Planungssystem zu nehmen.

Aus der DE 10 2008 061 252 A1 ist ein Verfahren zur Planung und Steuerung einer logistischen Prozesskette bekannt. Dem Verfahren liegt die Aufgabe zugrunde, die Planung und Steuerung einer logistischen Prozesskette zu automatisieren, indem ein Prozessteilnehmer in die Lage versetzt wird, die Durchführung einer zu erbringenden landwirtschaftlichen Leistung autonom zu bestimmen. Dies geschieht auf Grundlage von Prozessinformationen in Abhängigkeit von Kontextprofilen des Prozessteilnehmers. Das Kontextprofil stellt die Beziehung zwischen dem Prozessteilnehmer und der von diesen erbringbaren landschaftlichen Leistung dar. So führt die DE 10 2008 061 252 A1 aus, dass es sich bei dem Prozessteilnehmer um einen Mähdrescher handelt, der sich zu einem bestimmten Zeitpunkt an einer bestimmten Position befindet und mit einer bestimmten Geschwindigkeit fährt. Ergibt eine Auswertung dieser Prozessinformationen über den Mähdrescher als Prozessteilnehmer, dass dieser zum Ernten eines Feldes bereit ist und aufgrund seiner Position ein abzuerntendes Feld erreichen kann, fällt der Mähdrescher autonom die Entscheidung, das Feld abzuernten. Ein weiterer Prozessteilnehmer ist ein Schlepper mit Transportanhänger, welchem von einem zentralen System Prozessinformationen übermittelt werden. Die Auswahl der an den Schlepper als Prozessteilnehmer übermittelten Prozessinformationen durch das zentrale System erfolgt in Abhängigkeit von dessen Initialkontext. Nähert sich der Schlepper einem zur Überladung bereitmachenden Mähdrescher, erfolgt eine Anpassung des Kontextprofils des Schleppers. Wie auch der Mähdrescher fällt der Schlepper autonom die Entscheidung darüber, welche landschaftliche Leistung entsprechend seines geänderten Kontextprofiles erbracht wird, indem dieser ihm vorliegende Prozessinformationen auswertet. Das Verfahren gemäß der DE 10 2008 061 252 A1 will dadurch ein manuelles Anfordern von Überladeunterstützung durch einen Maschinenbediener des Mähdreschers und eine anschließende manuelle Disposition eines Überladefahrzeugs durch einen Landwirt überflüssig machen.

Das Verfahren gemäß der DE 10 2008 061 252 A1 setzt voraus, dass eine Vielzahl von Prozessteilnehmern aktiv sind, die zwanglos miteinander interagieren können. Das autonome Agieren von Prozessteilnehmern kann jedoch die Planung und Steuerung der anderen an der logistischen Prozesskette beteiligten Prozessteilnehmer beeinflussen, indem die Auswirkungen einer autonom gefällten Entscheidung eines Prozessteilnehmers auf die anderen Prozessteilnehmer unberücksichtigt bleiben.

Somit ist es die Aufgabe der vorliegenden Erfindung, ein Verfahren der eingangs genannten Art bereitzustellen, welches sich durch eine Berücksichtigung der Auswirkungen abweichender Entscheidungen von einer vorgegebenen logistischen Planung agrarwirtschaftlicher Prozesse auszeichnet.

Diese Aufgabe wird erfindungsgemäß durch ein Verfahren gemäß den Merkmalen des Anspruches 1 gelöst.

Inderm das Verfahren zur Planung und Steuerung einer logistischen Prozesskette in der Agrarwirtschaft zumindest ein zentrales Planungssystem (1) und Prozessteilnehmer (2, 3, 4) umfasst und wobei dien Prozessteilnehmern (2, 3, 4) jeweils eine Steuerungseinrichtung (7) zugeordnet ist, durch die Verfahrensschritte:
- Definition eines abstrakten Modells der Prozesskette, wobei die Prozesskette in Teilprozesse untergliedert wird und Teilaufträge für die Prozessteilnehmer abgeleitet werden
- die Teilaufträge werden von den Prozessteilnehmern bearbeitet, wobei die Teilaufträge an die jeweilige, dem Prozessteilnehmer zugeordnete Steuerungseinrichtung übermittelt werden,
- wobei jede Steuerungseinrichtung eine Steuerarchitektur umfasst, wobei jede Steuerarchitektur interagierende Komponenten umfasst und die interagierenden Komponenten maschinenlesbare semantische Datenmodelle umfassen,
- wobei die maschinenlesbaren semantischen Datenmodelle Prozessschritte und die Prozessteilnehmer der logistischen Prozesskette beschreiben,
- wobei Regeln zur Klassifizierung von Prozessteilnehmern und durchzuführender Prozessschritte anhand des maschinenlesbaren semantischen Datenmodells (PM) generiert werden,
- Relationen zwischen einem Prozessschritt und einem Prozessteilnehmer mittels des maschinenlesbaren semantischen Datenmodells (PM) beschrieben werden,
- kontinuierliche Bestimmung und Auswertung von Prozessdaten der Prozessteilnehmer, welche zu einer auf dem maschinenlesbaren semantischen Datenmodell (PM) basierenden automatisierten regelbasierenden Inferenz (IM) auf einen durch einen Prozessteilnehmer durchzuführenden abweichenden Prozessschritt verwendet werden, wird sichergestellt, dass Auswirkungen abweichender Entscheidungen von einer vorgegebenen logistischen Planung agrarwirtschaftlicher Prozesse berücksichtigt werden. Das so beschaffene erfindungsgemäße Verfahren hat insbesondere den Effekt, dass die globale Planung der agrarwirtschaftlichen Prozesskette zentral erfolgt, während die Abarbeitung der zentral geplanten Prozesskette in die Kommunikationsebene zwischen den beteiligten Prozessteilnehmern verschoben wird, sodass schnell und effizient auf sich ergebende Änderungen in der zentral geplanten Prozesskette reagiert werden kann.

In einer vorteilhaften Ausgestaltung der Erfindung wird die Handlungsplanung eines Prozessteilnehmers oder eines kooperativen Verbandes von Prozessteilnehmern dezentral realisiert und wobei die jeweilige Steuerungseinrichtung (7) eingerichtet ist, nach einem Steuerzyklus zu arbeiten. Dies hat insbesondere den Effekt, dass die dezentrale Planung ebenfalls sicherstellt, dass schnell und effizient auf sich ergebende Änderungen in der zentral geplanten Prozesskette reagiert werden kann.

In einer weiteren vorteilhaften Ausgestaltung der Erfindung umfasst der jeweilige Steuerzyklus fünf Schritte, nämlich
einen ersten Schritt in welchem der Steuerungsablauf auf der jeweiligen Steuerungseinrichtung analysiert wird,
einen zweiten Schritt in welchem mögliche Änderungsszenarien aus dem Prozessmodell (PM) extrahiert werden,
einen dritten Schritt in welchem die Änderungsszenarien an ein ereignisdiskretes Simulationssystem (SM) übergeben werden,
einen vierten Schritt in welchem die Simulation der Änderungsszenarien bewertet und ein Referenzszenario gewählt wird,
einen fünften Schritt in welchem aus dem gewählten Referenzszenario Änderungen an bestehenden Teilaufträgen oder neu zu vergebende Teilaufträge identifiziert und in der jeweiligen Steuereinrichtung hinterlegt werden.

Gerade bei einem aufeinander abzustimmenden Zusammenwirken landwirtschaftlicher Arbeitsmaschinen als Prozessteilnehmer im Rahmen einer logistischen Prozesskette in der Agrarwirtschaft, wie dies für einen Ernteprozess mit allen damit verbundenen Bearbeitungs- und Verarbeitungs- und Transportschritten erforderlich ist, ergeben sich eine Vielzahl von Wechselwirkungen der Prozessteilnehmer untereinander. So hat beispielsweise der Ausfall eines Prozessteilnehmers, einer Erntemaschine oder eines Transportfahrzeugs, sofortige und unmittelbare Auswirkungen auf die gesamte Prozesskette und den Prozessablauf. Gleiches gilt für eine Verzögerung der Ankunft eines Prozessteilnehmers an seinem Bestimmungsort aufgrund von nicht vorhersehbaren Störungen, wie einem Stau, während der Anfahrt. Vorstehend beispielhaft genannte Wechselwirkungen sind im Vorhinein nicht planbar und lassen sich dementsprechend auch nicht berücksichtigen, da diese Wechselwirkungen sich in Abhängigkeit von wie auch immer gearteten spontan auftretenden Störungen spontan ergeben. Diese spontan auftretenden Störungen, die zu kritischen Situationen im Prozessablauf führen, sollen mittels des hier vorgeschlagenen Verfahrens erkannt und ihre Auswirkungen auf die Prozessabläufe bzw. die Prozesskette vermieden werden. Zudem sollen sich spontan ergebende Wartesituationen aufgelöst werden.

Es ist das Ziel des Verfahrens, dass die Prozessteilnehmer ihre Rolle und die von ihnen auszuführenden Aufträge im Prozess selbsttätig verstehen und analysieren können, um eigenständig auf abweichende Handlungen und deren Auswirkungen auf andere an der Prozesskette beteiligte Prozessteilnehmer schließen zu können. Die hierfür erforderliche Prozessmodellierung basiert auf einer semantischen Technologie, die eine maschinenlesbare Modellierung der Prozesseschritte und Prozessteilnehmer ermöglicht. Als Beispiele für semantische Technologien seien Resource Description Framework (RDF) oder Web Ontology Language (OWL) genannt. Die maschinenlesbare Modellierung von Prozessschritten und Prozessteilnehmern erlaubt eine hohe Wiederverwendbarkeit von Kernkonzepten und -verhalten. Um die Prozessteilnehmer in die Lage zu versetzen, ihre Rolle im Prozess zu analysieren und eine entsprechende Reaktion darauf ableiten zu können, werden die Prozesse mit Hilfe semantischer Technologien maschinenlesbar modelliert, repräsentiert und mit regelbasierter Inferenz verknüpft. Zur Planung der Prozessketten und Auswahl von Aktionen wird mit ereignisdiskreten Simulationen und einer regelbasierten Auswertung auf Basis von vormodelliertem Expertenwissen gearbeitet. Hierzu werden von den Prozessteilnehmern durchzuführende Prozessschritte als Regeln abrufbar in einer Datenbank hinterlegt. Zur Identifizierung der individuellen Funktion eines Prozessteilnehmers werden Regeln in der Datenbank abrufbar hinterlegt, welche einen Prozessteilnehmer klassifizieren.

Zunächst wird eine geeignete Anwendungsdomäne mit all ihren relevanten Komponenten und Fragestellungen spezifiziert, d.h. es wird ein abstraktes Modell der Prozesskette definiert, das alle notwendigen Daten, beispielsweise eines Erntevorgangs für Silomais, enthält, die für eine gesamtheitliche Planung und Steuerung benötigt werden. Hierzu wird die Prozesskette in Teilprozesse gegliedert, wobei eine Differenzierung zwischen Teilprozessen durchgeführt wird, welche unabhängig voneinander bearbeitbar sind und welche ein unmittelbares Zusammenwirken zumindest zweier Prozessteilnehmer erfordern. Auf dieser Grundlage wird festgelegt, welche Planungsprobleme individuell oder kooperativ von den Prozessteilnehmern gelöst werden können. Bezogen auf eine typische logistische Prozesskette in der Agrarwirtschaft, wie der Durchführung einer Silomaisernte, bedeutet dies, dass zum Beispiel die initiale Ressourcenplanung im Kontext eines Gesamtauftrags, der die Basis einer vertraglich geregelten Interaktion von Lohnunternehmer und Landwirt bietet, erfolgt. In dem Gesamtauftrag als oberster Prozessebene ist festgeschrieben welche Felder zu ernten sind, welche Erntemaschinen und Fahrzeuge zur Vorplanung zur Verfügung stehen und in welchem Zeitrahmen die Ernte abgehalten werden soll. Pro Feld und Siloanlage existieren dann Unteraufträge, welche die Ernte, bzw. das Einlagern, organisieren und in Abstimmung miteinander auch die Koordination der Transportfahrzeuge und des Gutstroms übernehmen. Ausgehend von diesen Unteraufträgen wird die zu erbringende Ernteleistung auf einem jeweiligen Feld sowie die notwendige Verdichtungsleistung auf einem Silo weiter runter gebrochen und auf einzelne Prozessteilnehmer, das heißt Erntemaschinen, Transportfahrzeuge sowie Fahrzeuge zur Verdichtung übertragen. Diese Prozessteilnehmer nehmen an der globalen Prozessplanung teil und sind für die Aggregation aller Informationen an ihrem spezifischen Standort verantwortlich. Die Unteraufträge der unteren Ebenen der Prozesshierarchie sind somit die kleinteiligen Aktionen, die von den Prozessteilnehmern ausgeführt werden, wobei diese von den Prozessteilnehmern in lokaler Koordination oder individuell geplant und ausgeführt werden können.

Dabei können von den Prozessteilnehmern bestimmte eigene Prozessdaten an andere Prozessteilnehmer übermittelt werden. Den anderen Prozessteilnehmern sollen die gleichen Daten zur Verfügung gestellt werden, um die Auswirkungen der Durchführung eines abweichenden Prozessschrittes durch einen Prozessteilnehmer auf die eigene Planung analysieren und bewerten zu können. Dies ist insbesondere von Vorteil, wenn mehrere Prozessteilnehmer die Durchführung eines Prozesses untereinander koordinieren müssen.

Hierbei kann der Verfahrensschritt der regelbasierenden Inferenz dezentral durchgeführt werden. Jeder Prozessteilnehmer schließt für sich auf die Auswirkungen, die aus der Ausführung eines abweichenden Prozessschrittes für ihn und die anderen Prozessteilnehmer resultieren können.

So kann der von einem Prozessteilnehmer durchzuführende abweichende Prozessschritt mit anderen Prozessteilnehmern abgestimmt werden. So kann in gegenseitiger Abstimmung der Prozessteilnehmer untereinander eine geeignete Verhaltensweise bestimmt werden. Auf diese Weise lassen sich Entscheidungswege verkürzen. Insbesondere können vorhandene oder freiwerdende Potentiale zur besseren Ressourcennutzung genutzt werden. Dadurch können redundante Entscheidungen vermieden werden. Während individuelle Unteraufträge eigenständig von einem Prozessteilnehmer geplant und ausgeführt werden, bedürfen kooperative Unteraufträge der Abstimmung mehrerer Prozessteilnehmer. Hierzu ist in der Prozessmodellierung hinterlegt, welche Teilaufgabe das Zusammenwirken welcher Prozessteilnehmer erfordert und welche Daten zu welchen Zeitpunkten und mit welchen Aktualisierungsraten zwischen diesen ausgetauscht werden müssen.

Eine dezentrale Steuerung logistischer Prozesse verspricht große Potentiale zur Optimierung im Hinblick auf die Einsparung von Kosten, Zeit und gebunden Ressourcen. Insbesondere da die Rahmenbedingungen einer logistischen Prozesskette in der Agrarwirtschaft ein hohes Maß an räumlicher Verteiltheit der einzelnen Prozessteilnehmer mit sich bringen, bietet ein dezentraler Ansatz eine bessere und robustere Behandlung von Problemstellungen. Zudem lässt sich durch die Prozessanalyse auf den Prozessteilnehmern ein proaktiveres Verhalten initiieren als es über den Umweg über ein zentral gehostetes Serversystem möglich wäre.

Gemäß einer Weiterbildung ist vorgesehen, dass ein zweites semantisches Datenmodel mit von den Prozessteilnehmern erfassten Umgebungsdaten zur Erkennung von Prozesszuständen verknüpft wird. Die Prozessteilnehmer können mittels geeigneter Sensorik oder Empfangseinrichtungen Umgebungsdaten erfassen, wie ihre Positionsdaten, Wetterdaten, Verkehrsdaten und dergleichen mehr.

Des Weiteren kann das zweite semantische Datenmodel mit den Prozessteilnehmern zugeordneten georeferenzierten Daten verknüpft werden. Da die Prozessteilnehmer neben einem semantischen Datenmodell eines Ernteprozesses, ebenso ihre Umwelt verstehen müssen, ist eine zweite solche Wissensbasis, ein Umgebungsmodell, vorgesehen. Dieses ist ebenfalls als ein semantisches maschinenlesbares Datenmodell implementiert, welche zusätzlich mit einem Geoinformationssystem gekoppelt ist, um neben semantischer Inferenz auch geospatiale Anfragen und Schlussfolgerungen zuzulassen. Durch den Einsatz semantischer Repräsentationen in Kombination mit dem Geoinformationssystem zur Verarbeitung räumlicher Daten, lässt sich die Einbettung landwirtschaftlicher Prozessteilnehmer und Prozesse in die geographischen und geometrischen Daten gut beschreiben. Im Geoinformationssystem des Umgebungsmodells werden die räumlichen Daten der Prozessteilnehmer gespeichert und in einer Datenbank ein semantisches Modell, welches es ermöglicht die Geometrien im Geoinformationssystem mit einer formalen Darstellung des die Prozessteilnehmer repräsentierenden Datenmodells zu koppeln. Dabei wird zwischen mobilen Prozessteilnehmern, d.h. beispielsweise den Erntefahrzeugen oder den Transportfahrzeugen, und immobilen Prozessteilnehmern, wie einer Hofstätte oder Feldern, unterschieden. Als Geometrien für, insbesondere immobile, Prozessteilnehmer können zweidimensionale (2D) oder dreidimensionale (3D) Polygone verwendet werden. Für mobile Prozessteilnehmer bietet sich auch die Verwendung von bestehenden CAD-Modellen an. Immobile Prozessteilnehmer wie die Hofstätte und ein Feld unterscheiden sich insbesondere durch ihre unterschiedliche Strukturierung und die damit verbundenen, durch mobile Prozessteilnehmer durchführbaren Prozesse voneinander. Diese konzeptuellen Informationen sind Bestandteil des Umgebungsmodells. Verfügt jeder mobile Prozessteilnehmer über dieses Umgebungsmodell, so ermöglicht dies eine regelmäßige Aktualisierung der Position des jeweiligen mobilen Prozessteilnehmers in diesem Umgebungsmodell, indem ein Positionsortungssignal verwendet wird, um die Geometrie des mobilen Prozessteilnehmers in dem Umgebungsmodell zu bewegen. Anschließend lässt sich das Umgebungsmodell nutzen, um auf die räumlichen Beziehungen zwischen mobilen und immobilen Prozessteilnehmern zu schließen, welche wiederum Aufschluss über den aktuellen Prozesszustand geben.

Um dem semantischen Datenmodell räumliche Relationen durch geometrische Analyse zur Verfügung zu stellen, werden zwei Schritte durchgeführt. Zunächst werden Operatoren im Geoinformationssystem genutzt, um die räumlichen Relationen zwischen Prozessteilnehmern zu identifizieren, z.B. kann ein Punkt-in-Polygon Test verwendet werden, um die mittels Positionsortungssignal bestimmte Position eines jeden mobilen Prozessteilnehmers in den Grenzen eines immobilen Prozessteilnehmers, von Feldern oder Hofstellen, zu verorten. Die auf diese Weise gewonnenen räumlichen Relationen werden als Fakten in das semantische Modell eingepflegt und lassen sich nutzen, um prozessbezogene Informationen zu erhalten. Werden zudem zeitliche Übergänge zwischen den aus einer Positionsänderung resultierenden Prozesszuständen herangezogen, um die Prozessereignisse zu erkennen, hat man ein automatisches, auf Sensordaten basierendes Prozessnachverfolgungssystem, welches direkt auf dem mobilen Prozessteilnehmer implementiert ist.

Eine vorteilhafte Weiterbildung sieht vor, dass zur Kommunikation der Prozessteilnehmer untereinander eine opportunistische Routingstrategie verwendet wird. Damit die am Prozess beteiligten Prozessteilnehmer untereinander prozessrelevante Daten austauschen können, wird dasjenige Kommunikationsnetzwerk verwendet, welches, wegen der in der Regel verteilt sowie in Regionen mit gering ausgebauter Kommunikationsinfrastruktur stattfindenden Prozesse, eine möglichst robuste Kommunikation ermöglicht. Dabei wird sich der Umstand zu Nutze gemacht, dass die Prozessteilnehmer über mehrere Kommunikationsschnittstellen verfügen, welche einen Datenaustausch auf unterschiedlichen Kommunikationswegen ermöglichen. So werden mittels der opportunistischen Routingstrategie die verfügbaren Kommunikationsschnittstellen im Hinblick auf die zum jeweiligen Zeitpunkt verfügbare Kommunikationsgeschwindigkeit betrachtet und bewertet. Auf dieser Grundlage wird eine Entscheidung gefällt, welcher Kommunikationsweg für den Datentransport am geeignetsten erscheint. Diese Entscheidung wird unter Berücksichtigung der zu versendenden Daten gefällt, welchen über sogenannte quality of service (QoS)-Parameter verschiedenen Prioritätsklassen zugeordnet werden. D.h. dass nicht zwingend der schnellste Transportweg genommen wird, sondern der, welcher der Priorisierung am besten entspricht. Ebenso wird flexibel zwischen infrastrukturbasierten und infrastrukturlosen Wegen gewechselt. Das Datenpaket wird also seinen QoS Parametern opportun versandt.

Ergänzend kann vorgesehen sein, dass die Kommunikation der Prozessteilnehmer untereinander zumindest teilweise verzögerungstolerant durchgeführt wird. Es kommen hierfür so genannte verzögerungstolerante Netzwerke zum Tragen, bei denen die Eigenbewegung von miteinander kommunizierenden Prozessteilnehmern ausgenutzt wird, um Daten zu transportieren. Im Rahmen der Erfindung werden die Auftrags- und Prozessdaten der mobilen Prozessteilnehmer, insbesondere Fahrpläne der als Transportfahrzeuge ausgebildeten mobilen Prozessteilnehmer und die darin enthaltenen Ankunftszeiten verwendet, da diese eine Aussage darüber machen welche Prozessteilnehmer für eine verzögerungstolerante Übertragung geeignet sind. Da alle mobilen Prozessteilnehmer Teilnehmer des verzögerungstoleranten Netzwerkes sein können, kann auf diese Weise über das Routing von Daten entschieden werden. Daten werden also an den Prozessteilnehmer weitergegeben, welcher zum frühestmöglichen Zeitpunkt mit dem Empfänger in Kontakt kommt. Entsprechend werden mittels des verzögerungstoleranten Netzwerkes vor allem umfassende, nicht zeitkritische Daten, wie z.B. Logfiles eines CAN BUS, nicht über das Mobilfunknetz zu übertragen, sondern einem Prozessteilnehmer mitgegeben. Dies verzögert die Kommunikation zwar mitunter, ist aber ebenso kostengünstiger. Auf vergleichbare Weise kann ein auf dem verzögerungstoleranten Netzwerk basierender Ansatz Abhilfe schaffen, wenn eine Mobilfunkverbindung nicht verfügbar ist. So kann ein Prozessteilnehmer zeitkritische Daten von einem anderen Prozessteilnehmer beispielsweise über eine Kommunikationsschnittstelle mit lokal begrenzter Reichweite, wie adhoc W-LAN oder Bluetooth, empfangen und mitnehmen, wenn es sich auf den Weg zu einem anderen Prozessteilnehmer macht. Die mitgenommenen Daten werden dann per Mobilfunkt versendet, sobald dieser Prozessteilnehmer in die Reichweite eines Mobilfunknetzes kommt. Ein solcher Ansatz bietet sich im beispielhaft genannten Anwendungsfall der Silomaisernte besonders an, da Transportfahrzeuge zyklisch zwischen abzuerntendem Feld und Silo pendeln und somit eine verlässliche Brücke zwischen diesen beiden immobilen Prozessteilnehmern bilden können. Alternativ können wichtige Informationen aus dem Verdichtungsprozess am Silo, welche für den als Feldhäcksler ausgeführten Prozessteilnehmer bestimmt sind, auf ein Transportfahrzeug übertragen werden, welches zu dem sich in einem Funkloch befindlichen Feldhäcksler fährt, um diesem die Daten zu übermitteln.

Das vorstehend dargestellte Verfahren lässt sich erweitern und auf andere landwirtschaftliche Prozesse, deren Funktion und Effizienz von einer logistischen Prozesskette abhängig ist, übertragen. Es ist nicht nur auf die Planung und Steuerung einer Silomaisernte eingeschränkt.

Weiterhin wird die eingangs gestellte Aufgabe durch eine Steuerungseinrichtung gelöst, welche zur Durchführung eines Verfahrens zur Planung und Steuerung einer logistischen Prozesskette in der Agrarwirtschaft nach einem der Ansprüche 1 bis 11 eingerichtet ist. Die Steuerungseinrichtung wird eingesetzt, um einen Prozessteilnehmer mit anderen Prozessteilnehmern zu vernetzen und um Prozesse auf quantitativer Basis unmittelbar auf der Prozessebene zu steuern. Hierzu werden die beteiligten Prozessteilnehmer dahingehend digitalisiert und vernetzt, dass sie mit Hilfe des semantischen Datenmodells auf den Steuerungseinrichtungen ihre Rolle im Prozess verstehen, ihren eigenen Prozessstatus ermitteln können, um ihn mit anderen Prozessteilnehmern auszutauschen und in gegenseitiger Abstimmung mit den anderen Prozessteilnehmern angemessene Verhaltensweisen zu bestimmen. Dazu wird auf der Steuerungseinrichtung eine Logik implementiert, die es erlaubt Prozessketten abzubilden und zur Ausführung eine digitalisierte Überwachung und Analyse des jeweiligen Prozesses durchzuführen. Bei Abweichungen von vorgegebenen Planungen kommunizieren und koordinieren sich die Steuerungseinrichtungen miteinander, um neue Pläne zu generieren.

Hierzu kann die Steuerungseinrichtung mehrere, mittels unterschiedlicher Kommunikationsprotokolle kommunizierende, Schnittstellen aufweisen. Dies stellt den Datenaustausch mittels eines verzögerungstoleranten Netzwerkes sicher, da auf verschiedenste Kommunikationsmedien und Kommunikationswege zurückgegriffen werden kann.

In bevorzugter Weiterbildung kann die Steuerungseinrichtung ein Simulationsmodul, ein Kommunikationsmodul und ein Inferenzmodul umfassen, welche mit zumindest einer Datenbank in Verbindung stehen, die mittels eines maschinenlesbaren semantischen Datenmodells ein Prozessmodell bzw. eine Prozessumgebung des Prozessteilnehmers abbildet.

Weiterhin kann die Steuerungseinrichtung zur kontinuierlichen Aktualisierung der Inhalte der zumindest einen Datenbank eingerichtet sein.

Die vorliegende Erfindung wird nachstehend anhand eines in den Zeichnungen dargestellten Ausführungsbeispiels näher erläutert.

Es zeigen:
- Fig. 1: eine Gegenüberstellung von Konzepten zur Planung und Steuerung mit einem zentralen Planungssystem und einem dezentralen Ansatz;
- Fig. 2: eine Prozesshierarchie einer Silomaisernte;
- Fig. 3: eine Steuerungsarchitektur einer Steuerungseinrichtung;
- Fig. 4a bis 4c: in einem Geoinformationssystem hinterlegte räumliche Modelle;
- Fig. 5: eine schematische Darstellung einer dezentralisierten Kommunikationsstruktur.

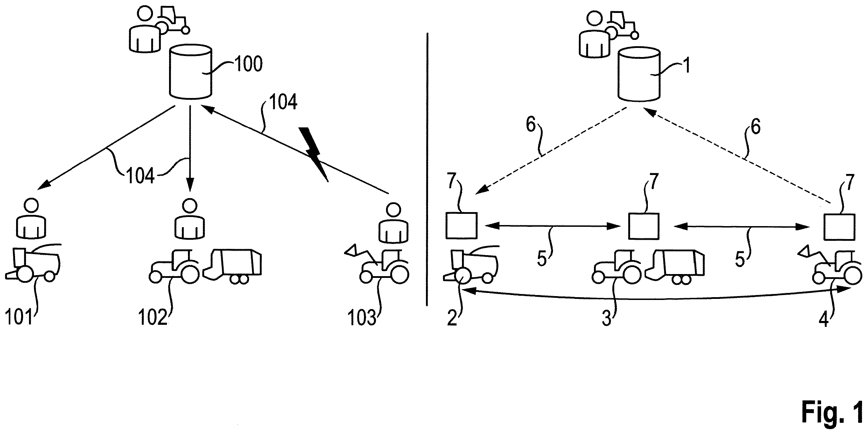

Die Darstellung in Fig. 1 zeigt eine Gegenüberstellung von Konzepten zur Planung und Steuerung mit einem zentralen Planungssystem, in Fig. 1 links dargestellt, und einem dezentralen Ansatz, wie er der Erfindung zugrunde liegt, in Fig. 1 rechts dargestellt. Die Koordination logistischer Aufgaben in landwirtschaftlichen Prozessen wird im Allgemeinen entweder manuell durch einen Disponenten, oftmals der Landwirt oder der Lohnunternehmer selbst, oder aber mit Hilfe eines EDV-basierten Dispositionssystems 100 geplant. In beiden Fällen handelt es sich um einen zentralen Ansatz, bei welchem in einem zentralen Knoten die Aggregation aller relevanten Daten geschieht und anschließend eine Planung der gesamten Prozesskette vollzogen wird. Die aus der Planung resultierenden Pläne werden anschließend als Aufträge an Bediener der Prozessteilnehmer 101, 102, 103, d.h. vor allem landwirtschaftliche Arbeitsfahrzeuge zur Durchführung von Erntevorgängen oder Be- und Verarbeitungsschritten sowie dem Transport, weitergegeben, welche diese dann zur Prozesslaufzeit ausführen. Neben diesen mobilen Prozessteilnehmern gibt es immobile Prozessteilnehmer, wie beispielsweise die Hofstätte, auf der Hofstätte befindliche Einrichtungen, Felder und dergleichen mehr. In den meisten Fällen ist eine solche zentrale Planung statisch, weil lediglich die vor Prozessbeginn vorliegenden Daten in die Planung einbezogen werden.

Soll die Durchführung des Prozesses auch während der Laufzeit überprüft werden, bedarf es einer Analyse des Prozessfortschritts bei der Planausführung. Ein aufgrund der Analyse entstehender Bedarf, der aus Störungen der logistischen Kette resultiert, beispielsweise dem Ausfall des Transportfahrzeuges 102, erfordert reaktiv eine Neuplanung. Diese Planung erfolgt ebenfalls im zentralen Planungssystem 100, wie es Stand der Technik ist, wozu zunächst alle relevanten Informationen über den Prozessfortschritt mittel der Kommunikationsmedien 104 an das zentrale System 100 zurückgegeben werden müssen, wo sie anschließend verarbeitet werden. Dies stellt ein Problem dar, da landwirtschaftliche Prozesse meist räumlich stark verteilt sind und gleichzeitig in infrastrukturschwachen Regionen durchgeführt werden, so dass die nötigen Kommunikationswege zwischen den Prozessteilnehmern im Prozess und dem zentralen Planungssystem nicht gegeben oder störanfällig sind. Dies gilt ebenso für den rückwärtigen Informationsfluss, mit dem neue Pläne von dem zentralen System 100 zu den betroffenen Prozessteilnehmern 101, 102 gegeben werden. Kommt es zu Kommunikationsproblemen, muss also entweder mit unvollständigen Informationen geplant werden, oder aber das zentrale Planungssystem 100 muss warten, bis alle benötigten Daten angekommen sind. Die Folge sind Fehlentscheidungen basierend auf fehlenden Informationen und/oder hohe Latenzen in der Steuerung der Prozesse, was wiederum zu unnötigen Standzeiten und anderen Störfällen führt. Zentrale Steuerungsansätze eignen sich demnach nicht oder nur bedingt für die Steuerung störanfälliger, verteilter Prozesse in Arealen mit geringer oder nicht durchgehender Konnektivität zur Kommunikation zwischen ausführenden Prozessteilnehmern 101, 102, 103 und dem zentralen Planungssystem 100.

Die vorstehend beschriebenen Probleme lassen sich vermeiden oder ihre Auswirkungen zumindest mindern, indem ein dezentraler Ansatz zur Steuerung und Planung logistischer Prozesse in der Landwirtschaft verfolgt wird. Hierzu wird die Kommunikation über den Prozess in die Prozessebene, d.h. in die exekutive Ebene und die Koordination dieses Prozesses auf Prozessteilnehmer 2, 3, 4 verschoben, sodass diese dort planen und steuern, wo sowohl die Probleme auftreten, als auch die relevanten Daten zum Finden einer Lösung anfallen.

Teilprozesse landwirtschaftlicher Prozesse sind zumeist räumlich verteilt und können entsprechend gruppiert und räumlich lokal koordiniert werden. In der Silomaisernte ist der Teilprozess Ernte auf einem Feld räumlich getrennt von dem Teilprozess Einlagerung des Erntegutes in ein Silo auf einer Hofstätte. Die Erntestrategie eines als Feldhäcksler ausgeführten Prozessteilnehmers 2, sowie alle von als Transportfahrzeug ausgebildeten Prozessteilnehmern 3 durchzuführenden Überladeprozesse werden von den Prozessteilnehmern 2, 3 selbst im Feld koordiniert, ohne den Weg über ein zentrales Planungssystem 1 zu nehmen. Gleiches gilt für die Teilprozesse des Einlagerns im Silo, also das Abladen von Erntegut, sowie das Schieben und Verdichten des Ernteguts durch ein als Verdichtungsfahrzeug ausgebildeten Prozessteilnehmer 4. Diese Verteiltheit der Teilprozesse lässt sich nutzen, um die Steuerung dieser Teilprozesse zu entkoppeln, indem alle Vorgänge eines solchen lokalen Teilprozesses am Ort des Geschehens koordiniert werden.

Räumlich begrenzte lokale Teilprozesse sind meist zeitkritisch und datenintensiv und profitieren deshalb von einem lokalen breitbandigen Kommunikationsmedium 5. Räumlich verteilte globale Prozesse erlauben hingegen eine zeitlich langsamere Steuerung und die Reduktion auf kompakte Statusdaten, welche auch über schmalbandige und/oder verzögerungstolerante Kommunikationsmedien 6 ausreichend schnell kommuniziert werden können. Die Überladung von einem Feldhäcksler 2 auf ein Transportfahrzeug 3 als lokal begrenzter Teilprozess erfordert eine kontinuierliche Steuerung in kurzen Zeitintervallen und ist mit einem hohen Datenaufkommen verbunden, da die zu überladene Menge sowie das Fahrverhalten beider Prozessteilnehmer 2, 3 eng auf einander abgestimmt werden müssen. Es besteht also ein hoher lokaler Kommunikationsbedarf. Das Anpassen von eingehendem und ausgehendem Massestrom im Silo stellt eine globale Fragestellung dar. Diese lässt sich hingegen auf kompakte Statusdaten, wie Zeitpläne, die Ernteleistung des Feldhäckslers 2 und die Verdichtungsleistung des Verdichtungsfahrzeugs 4 im Silo, reduzieren. Ebenso ist die Planung der Zuordnung von Transportfahrzeugen zu Feldhäckslern und deren Zeit- und Kapazitätsplanung nicht so zeitkritisch, wie das Steuern einer direkten Kooperation der Prozessteilnehmer.

Moderne Erntemaschinen und Transportfahrzeuge sind in der Regel mit umfassenden Telemetriesystemen und Steuerungseinrichtungen 7 ausgestattet, welche die internen Zustände des Feldhäckslers 2 oder des Transportfahrzeuges 3 erfassen und auch regelnd auf den Feldhäcksler 2 oder das Transportfahrzeug 3 selbst zugreifen. Eine zu diesem Zweck bereits bestehende Steuerungsarchitektur lässt sich auch zur Verbesserung transportlogistischer Aufgaben nutzen, wenn eine entsprechende Digitalisierung der Prozesse umgesetzt wird und die Prozessteilnehmer 2, 3, 4 mit geeigneten Planungs- und Steuerungssystemen ausgestattet werden. Hierzu wird im Rahmen der Erfindung ein Verfahren zur Planung und Steuerung einer logistischen Prozesskette in der Agrarwirtschaft auf den Steuerungseinrichtungen 7 der Prozessteilnehmer 2, 3, 4 implementiert, so dass die Prozessteilnehmer 2, 3, 4 ihre Rolle und ihre Aufträge im Prozess selbstständig verstehen und analysieren können und auch eigenständig auf Handlungen schließen können.

Gemäß dem dezentralen Ansatz wird die Entscheidungsfindung von dem zentralen Planungssystem 1 respektive Leitrechner auf die Steuerungseinrichtungen 7 der Prozessteilnehmer 2, 3, 4 verlagert, wie in Fig. 1 veranschaulicht ist.

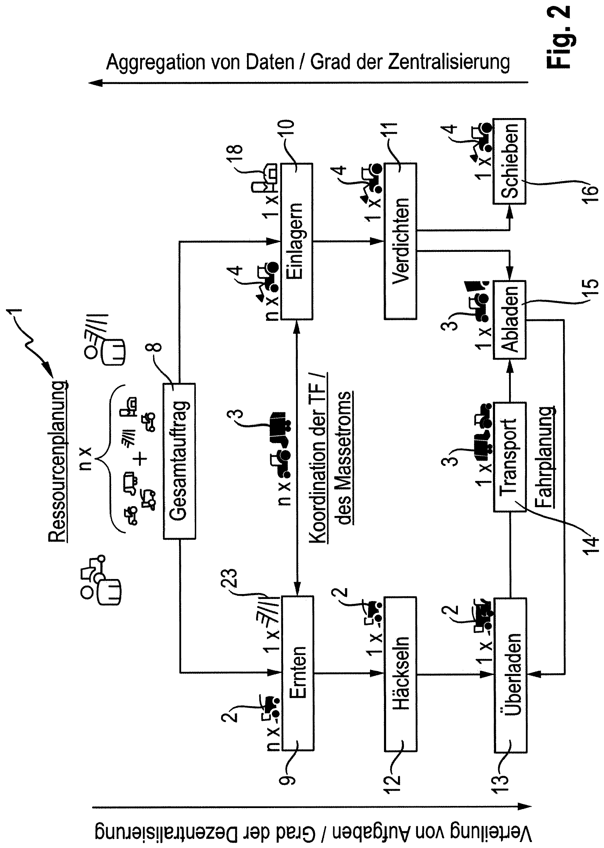

Im Folgenden wird die Architektur des auf den Steuerungseinrichtungen 7 implementieren Verfahrens dargestellt. Hierzu ist in Fig. 2 eine Prozesshierarchie einer Silomaisernte veranschaulicht. Zunächst wird eine geeignete Anwendungsdomäne mit all ihren relevanten Komponenten und Fragestellungen spezifiziert. Hierzu wird ein abstraktes Modell der Prozesskette definiert, welches alle notwendigen Daten enthält, die zur Planung und Steuerung der Prozessteilnehmer 2, 3, 4 benötigt werden. Hierzu wurde die Prozesskette der Silomaisernte in Teilprozesse untergliedert. Bei der Untergliederung wird differenziert, welche Teilprozesse in der Prozesskette möglichst unabhängig voneinander bearbeitet werden können, damit eine dezentrale Steuerung möglich wird. Weiterhin wird festgelegt, welche Planungsprobleme individuell oder kooperativ gelöst werden können. So geschieht zum Beispiel die initiale Ressourcenplanung der Silomaisernte im Kontext eines Gesamtauftrags 8, der die Basis einer vertraglich geregelten Interaktion von Lohnunternehmer und Landwirt bietet, auf dem zentralen Planungssystem 1. In dem Gesamtauftrag 8 ist festgeschrieben, welche Felder zu ernten sind, welche Prozessteilnehmer 2, 3, 4, d.h. Erntemaschinen und Transportfahrzeuge, für die Vorplanung zur Verfügung stehen und in welchem Zeitrahmen die Ernte abgehalten werden soll. Für jedes Feld und jede Siloanlage existieren dann Unteraufträgen 9, 10, welche die Vorgänge Ernten bzw. Einlagern organisieren und in Abstimmung miteinander auch die Koordination der Transportfahrzeuge 3 und des Gutstroms übernehmen. Da Felder und Siloanlagen auf Grund ihrer Beschaffenheit in der Regel über keine Steuerungseinrichtung verfügen, werden diese stellvertretend von ausgewählten mobilen Prozessteilnehmern 2, 3, 4, sogenannten Koordinatormaschinen, die auf diesen Feldern oder Siloanlagen aktiv sind, verwaltet. Ausgehend von diesen Unteraufträgen 9, 10 werden die zu erbringende Ernteleistung sowie Verdichtungsleistung planerisch weiter runter gebrochen und als Teilaufträge Häckseln 12, Überladen 13, Transport 4, Abladen 15 Verdichten 11 und Schieben 16 auf die einzelnen Prozessteilnehmer 2, 3, 4 übertragen. Diese Prozessteilnehmer 2, 3, 4 nehmen also an der globalen Prozessplanung teil und sind für die Aggregation aller Informationen an ihrem Standort verantwortlich. Die Teilaufträge 11 bis 16 der unteren beiden Ebenen der Prozesshierarchie sind somit die kleinteiligen Prozesse, die von den Prozessteilnehmern 2, 3, 4 ausgeführt und auch in lokaler Koordination oder individuell geplant und ausgeführt werden können.

Die in der Modellierung des Prozesses festgelegten Teilaufträge 11 bis 16 werden von einem Prozessteilnehmer 2 allein, oder von mehreren Prozessteilnehmern 2, 3 oder 3, 4 in Kooperation bearbeitet. Hierzu werden die Teilaufträge 12 bis 16 von der Steuerungsarchitektur, welche auf den Steuerungseinrichtungen 7 der Prozessteilnehmer 2, 3, 4 implementiert ist, verwaltet. Diese Verwaltung geschieht gemäß den Zielvorgaben der Teilaufträge 11 bis 16. Diese Zielvorgaben können Wertebereiche hinsichtlich der zulässigen Kosten, der eingesetzten Zeit und der zu transportierenden Mengen etc. umfassen, die der entsprechende Prozessteilnehmer 2, 3, 4 bei der Ausführung des spezifischen Teilauftrages 11 bis 16 einzuhalten hat.

Die Wertebereiche der Zielvorgaben werden entsprechend der aktuellen Vorplanung festgelegt und zur Ausführung überprüft und gegebenenfalls nachgesteuert. Gemäß der Prozesshierarchie werden hierzu die Ziele der gesamten Ernte (aus dem Gesamtauftrag) stückweise runtergebrochen und als Teilaufträge 11 bis 16 an die Prozessteilnehmer 2, 3, 4 bei delegiert. Die Prozessteilnehmer 2, 3, 4 bei, welche die jeweiligen Teilaufträge 11 bis 16 erhalten, koordinieren entsprechend deren Aufführung. Während der Ausführung werden die anfallenden Daten den entsprechenden Teilaufträgen 11 bis 16 zugeordnet und von unten nach oben in der Auftragshierarchie aggregiert und gemäß den Zielvorgaben ausgewertet.

Im Hinblick auf die Zuordnung von Teilaufträgen 11 bis 16 zu Steuerungseinrichtungen 7 wird zwischen individuellen Teilaufträgen 12, 14, 16 und kooperativen Teilaufträgen 11, 13 unterschieden. Während individuelle Teilaufträge 12, 14, 16 eigenständig von einem Prozessteilnehmer 2, 3, 4 geplant und ausgeführt werden, bedürfen kooperative Teilaufträge 11, 13 der Abstimmung mehrerer Prozessteilnehmer 2, 3, 4 miteinander. Hierzu ist in der Prozessmodellierung hinterlegt, welche kooperativ zu bearbeitende Teilaufgabe welche Prozessteilnehmer als Kooperationspartner benötigt und welche Daten zu welchen Zeitpunkten und mit welchen Aktualisierungsraten zwischen den Prozessteilnehmern ausgetauscht werden müssen. Ebenfalls ist in der Modellierung der Teilaufträge 11 bis 16 hinterlegt, welche Informationen an den Gesamtauftrag 8 und die Unteraufträge 9, 10 weitergeleitet werden müssen. Ein Beispiel hierfür ist die Aggregation der individuellen Kosten aller Teilaufträge im Gesamtauftrag 8 zum Erstellen einer Rechnung nach Abschluss eines Erntevorganges.

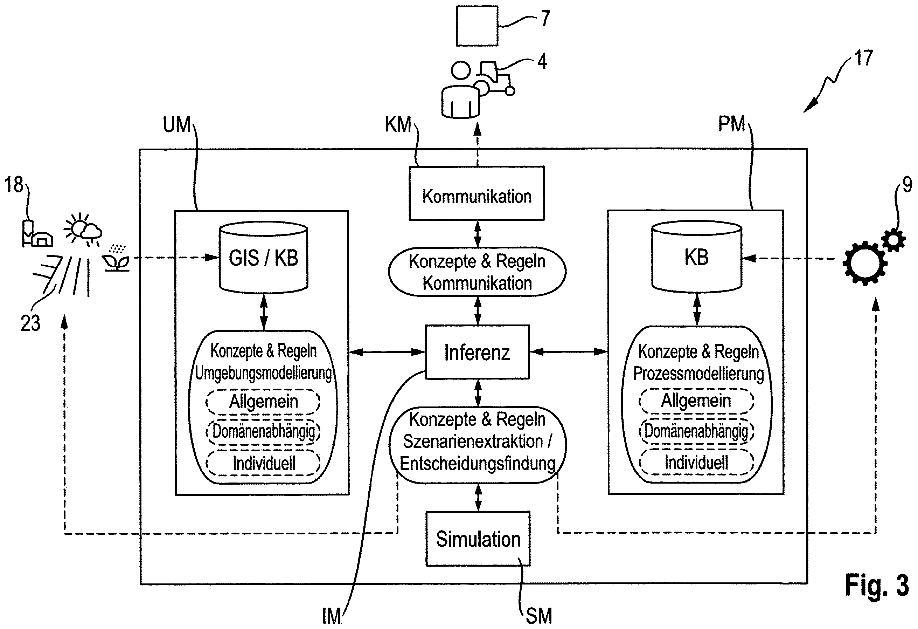

Die Darstellung in Fig. 3 zeigt eine in die Steuerungseinrichtung 7 des Prozessteilnehmers 4 implementierte Steuerungsarchitektur 17. Die Steuerungsarchitektur 17 umfasst mehrere interagierende Komponenten. Diese Komponenten umfassen eine Reihe von maschinenlesbaren Datenmodellen, ein Umgebungsmodell UM und ein Prozessmodell PM, welche die Datenhaltung der Steuerungseinrichtung 7 realisieren. Diese beiden maschinenlesbaren Datenmodelle, das Umgebungsmodell UM und das Prozessmodell PM, beschreiben den Prozessteilnehmer 4, d.h. beispielsweise die Art oder den Typ des Prozessteilnehmers seine Funktion und dergleichen mehr, sowie die Prozesse und die Umgebungen in die der Prozessteilnehmer 4 eingebettet ist. Um aus den Daten von Umgebungsmodell UM und Prozessmodell PM Schlussfolgerungen über den Prozess anzustellen, wird ein regelbasiertes Inferenzmodul IM verwendet, welches unter anderem den Datenexport zu einem Kommunikationsmodul KM und einem Simulationsmodul SM der Steuerungseinrichtung 7 regelt. Während das Kommunikationsmodul KM den Austausch von Daten zwischen Steuerungseinrichtungen 7 verschiedener Prozessteilnehmer 2, 3, 4 realisiert, ist die Evaluation möglicher logistischer Szenarien die Aufgabe des Simulationsmoduls SM.

Damit Erntekampagnen von den Steuerungseinrichtungen 7 der Prozessteilnehmer 2, 3, 4 dargestellt werden können, ist es erforderlich, die vorstehend beschriebene Prozesshierarchie in eine maschinenlesbare Beschreibung zu überführen. Hierfür wird eine geeignete formale Wissensrepräsentation benötigt.

Die Erfindung baut hier auf die etablierten Standards des Semantic Webs auf und umfasst in erster Linie eine sprachlich gefasste und formal geordnete Abbildung der an den Prozessen beteiligten Klassen und Relationen, auch Ontologien genannt, in der Notation der Web Ontology Language (OWL). Diese Ontologien geben beispielsweise die Konzepte und deren Attribute an, welche es erlauben Prozessteilnehmer 2, 3, 4 zu beschrieben. Des Weiteren definieren sie Relationen, die es erlauben Instanzen von Konzepten mit einander zu verknüpfen, z.B. um anzugeben dass ein Anbaugeräte an einem Traktor angeschlossen ist, und um Attribute mit Datentypen zu besetzen, z.B. um das spezifische Ladevolumen eines Anhängers mit 45 m³ zu beziffern. Das formale Vokabular der Ontologien bietet die Basis Fakten über die Prozessteilnehmer 2, 3, 4, den Plan, sowie den laufenden Prozessfortschritt zu formulieren. Diese bilden zusammen eine semantische Wissensdatenbank KB, welche elementarer Bestandteil des Prozessmodells PM ist. Die Wissensdatenbank KB speichert also sowohl eine konzeptuelle Beschreibung der Anwendungsdomäne, sowie den internen Zustand des jeweiligen Prozessteilnehmers 2, 3, 4 ab.

Da die Prozessteilnehmer 2, 3, 4 neben einem Modell des Ernteprozesses ebenso ihre Umwelt verstehen müssen, gibt es eine zweite solche Wissensdatenbank KB als Bestandteil des Umgebungsmodells UM. Das Umgebungsmodell UM ist ebenfalls durch eine semantische Wissensdatenbank KB implementiert, welche zusätzlich mit einem Geoinformationssystem GIS gekoppelt wird, um neben semantischer Inferenz auch geospatiale Anfragen und Schlussfolgerungen zuzulassen. Durch den Einsatz semantischer Repräsentationen der Umgebung des Prozessteilnehmers 2, 3, 4 in Kombination mit dem Geoinformationssystem GIS zur Darstellung und Analyse räumlicher Daten, lässt sich die Einbettung von landwirtschaftlichen Prozessteilnehmern 2, 3, 4 und Prozessen in die geographischen und geometrischen Daten des Umgebungsmodells UM beschreiben.

Für eine geeignete Modellierung des Prozesses und eine maschinenlesbare Repräsentation muss das Prozessmodell einer jeden Steuerungseinrichtung 7 mit Daten gefüllt werden. Hierzu wird jede Steuerungseinrichtung 7 eines Prozessteilnehmers 2, 3, 4 initial von einem auf dem zentralen Planungssystem 1 vorgehaltenen zentralen Datenbanksystem mit Stammdaten versorgt. Das zentralen Planungssystem 1, z.B. ein Farm Management System, kann hierbei die Funktionen eines zentralen Steuerungsansatzes implementieren, beispielsweise eine initiale Vorplanung von Ressourcen und Abläufen vor der Ausführung der Ernte. Eine initiale zentrale Ressourcenplanung im Kontext des Gesamtauftrags ist zum Beispiel sinnvoll zur Auftragslegung zwischen dem Landwirt, dessen Felder bearbeitet werden sollen und dem Lohnunternehmer, der die hierfür erforderlichen Erntemaschinen und Fahrzeuge bereitstellt.

Neben der Versorgung mit Stammdaten, müssen das Prozessmodell PM und das Umgebungsmodell UM natürlich zur Laufzeit des Prozesses kontinuierlich aktualisiert werden. Hierzu werden von den Prozessteilnehmern 2, 3, 4 erfasste Sensordaten in die Datenhaltung der Steuerungseinrichtung 7 integriert. Aus der Fusion von internen Maschinendaten des Prozessteilnehmers 2, 3, 4 und Umgebungsinformationen wird dabei auf den aktuellen Prozesszustand des Prozessteilnehmers 2, 3, 4 geschlossen, was wiederum die Analyse des Arbeitsfortschrittes und einen damit verbunden Steuerungszyklus aktiviert. Ebenso informieren sich Prozessteilnehmer 2, 3, 4 gegenseitig darüber, wenn sie voneinander abhängig sind.

Die Handlungsplanung sowohl eines einzelnen Prozessteilnehmers 2, 3, 4 als auch einem kooperativen Verband von Prozessteilnehmern 2, 3, 4 wird dezentral realisiert, d.h. jede Steuerungseinrichtung 7 arbeitet den nachfolgend beschriebenen Steuerungszyklus ab.

Im ersten Schritt wird der Steuerungsbedarf auf einer Steuerungseinrichtung analysiert. Anhand der gegebenen Zielvorgaben eines Auftrags wird ein Soll/Ist-Vergleich zwischen der gegebenen Vorplanung und dem tatsächlichen Arbeitsfortschritt durchgeführt. Sowohl das geplante Erreichen von Prozesszuständen, als auch eine Abweichung von der Vorplanung, dem Referenzszenario, und der Ausführung stellen Ereignisse da, die einen Steuerungsbedarf erzeugen können. Implementiert wird diese Analyse durch eine semantische Analyse der relevanten Datenströme, die von den Prozessteilnehmern 2, 3, 4 bereitgestellt werden, welche wiederum regelbasierte Inferenzen auslösen.

Ist eine Prozesssituation identifiziert, die eine Neuplanung erforderlich werden lässt, wird ein zweiter Schritt ausgeführt. In dem zweiten Schritt werden mögliche Änderungsszenarien aus dem Prozessmodell PM extrahiert. Diese Änderungsszenarien variieren die eingesetzten Ressourcen und Parameterbereiche des aktuellen Plans bzw. Referenzszenarios. Hierdurch entsteht ein Planungsraum, in dem alternative Lösungen evaluiert werden können.

Die Extraktion möglicher Änderungsszenarien geschieht hierbei basierend auf landwirtschaftlichem Expertenwissen, welches in Form von semantischen Regeln die auf die Daten im Prozessmodell PM und Umgebungsmodell UM angewandt werden. Beispielweise lassen sich Faustregeln aus der landwirtschaftlichen Praxis, wie sie z.B. der Bund der Lohnunternehmer herausgibt, nutzen. Eine Faustregel empfiehlt z.B. eine bestimmte Anzahl von Transportfahrzeugen 3 in Abhängigkeit von der Feldgröße und der Distanz zwischen Feld und Betriebsstätte. Implementiert man diese auf Expertenwissen basierenden Regeln innerhalb der semantischen Wissensdatenbank KB des Prozessmoduls PM, kann das Prozessmodul PM ein geeignetes Szenario für einen gegebenen Auftrag identifizieren. Ebenso lässt sich regelbasierend beschreiben, welche sinnvollen Varianten es für ein solches Szenario gibt. So ist z.B. bei kleinen bis mittelgroßen Feldern eine Variation mit +/-1 Transportfahrzeug plausibel, mehr jedoch nicht. Codiert werden diese Regeln über Formalismen des Semantic Web, wie z.B. SWRL, SPIN oder JENA Rules. Ausgewertet werden diese durch das Inferenzmodul in der Steuerungsarchitektur, z.B. durch einen RETE Algorithmus implementiert in Apache JENA.

Um im Anschluss eine Neuplanung durchzuführen, werden die ermittelten Änderungsszenarien im dritten Schritt an das ereignisdiskrete Simulationssystem SM übergeben. Dieses simuliert die unterschiedlichen Änderungsszenarien mit verschiedenen Zeitplänen und unterschiedlichen Masseströmen, im Fall der Silomaisernte also der Verteilung von Kapazitäten auf die einzelnen Transportfahrzeuge, und ermittelt jeweils die entstehenden monetären und zeitlichen Kosten, basierend auf in dem Prozessmodell PM hinterlegten Kostenfunktionen und Kennlinien.

Da die Simulationen der verschiedenen Änderungsszenarien keine Wertung der durchgespielten Szenarien durchführt müssen die relevanten Kennzahlen, entstandene Kosten, benötigte Zeit, eingesetzte Ressourcen, anschließend verglichen und bewertet werden, um ein geeignetes Änderungsszenario zum neuen Referenzszenario/Plan zu wählen. Diese Bewertung wird in einem vierten Schritt durchgeführt, wobei die Auswertung ebenfalls über semantische Regeln implementiert wird.

Ist ein neues Referenzszenario bestimmt, werden hieraus die Änderungen an den bestehenden Teilaufträgen, bzw. die neu zu vergebenden Teilaufträge identifiziert und in dem Auftragsmanifest der Steuerungseinrichtung 7 hinterlegt und gegebenenfalls an beteiligte Prozessteilnehmer 2, 3, 4 versandt. Dies geschieht in einem fünften Schritt. In diesem fünften Schritt kann ein auf der Steuerungseinrichtung 7 aufsetzendes Assistenzsystem den neuen Plan als Handlungsempfehlungen für eine Bedienperson des Prozessteilnehmers 2, 3, 4 visualisieren. Die Bedienperson ist anschließend mit der Ausführung des neuen bzw. geänderten Teilauftrages betraut, während der Steuerungszyklus von vorne beginnt. Denkbar ist auch eine autonome automatisierte Umsetzung der Handlungsempfehlung durch die Steuerungseinrichtung 7.

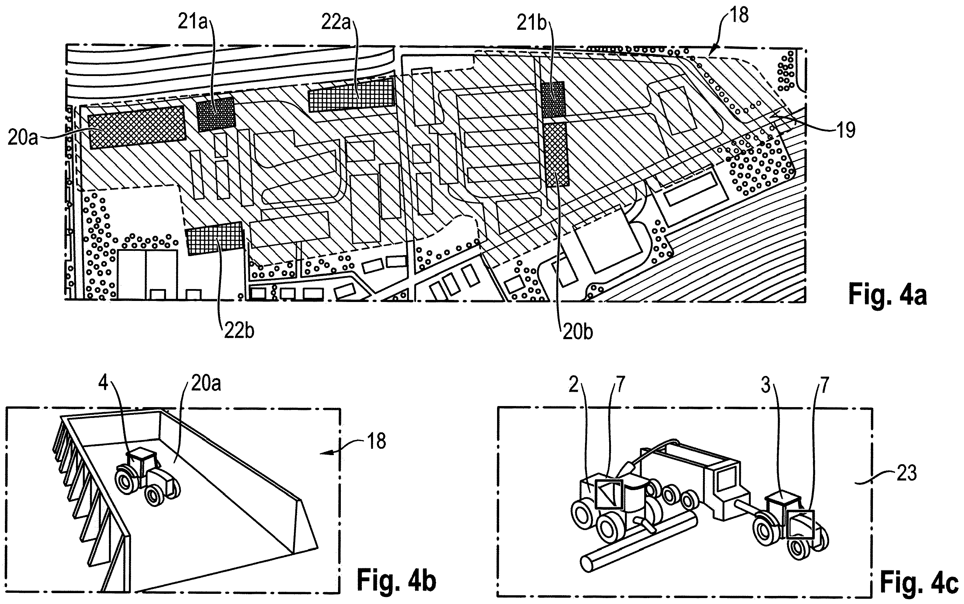

Fig. 4a zeigt ein in dem Geoinformationssystem GIS hinterlegtes räumliches Modell einer Hofstätte 18. Das Umgebungsmodell UM umfasst das Geoinformationssystem GIS sowie die zugehörige Wissensdatenbank KB. In dem Geoinformationssystem GIS werden die räumlichen Daten von Prozessteilnehmern 2, 3, 4, 18 gespeichert. In der Wissensdatenbank KB wird ein semantisches Modell gespeichert, dass es ermöglicht, die Geometrien im Geoinformationssystem GIS mit einer formalen Darstellung der repräsentierten Konzepte, d.h. Prozessteilnehmer zu koppeln. Die in Fig. 4 gezeigte Hofstätte 18 stellt einen immobilen Prozessteilnehmer dar, welcher z.B. in einer Schlagkartei modelliert werden kann. Die Hofstätte 18 besteht aus einer Grundfläche 19, mehreren Silos 20a, 20b und Silovorplätzen 21a, 21b, sowie Maschinenhallen 22a, 22b. Die entsprechenden Geometrien der immobilen Prozessteilnehmer 19, 20a, 21a, 22a, 20b, 21b, 22b, im dargestellten Ausführungsbeispiel als 2D-Polygone dargestellt, gilt es nun mit der konzeptuellen Beschreibung der Hofstätte 18 zu koppeln. Die Verwendung von 3D-Daten zur Wiedergabe der Geometrie der Prozessteilnehmer ist ebenfalls denkbar. Das semantische Modell beschreibt eine Reihe von Instanzen, z.B. Farm1, Farm2, ..., Maschinenhalle1, Maschinenhalle2, ... sowie Silol, Silo2, ..., basierend auf den Konzepten Hofstätte, Silo, Silovorplatz, Maschinenhalle, etc. Diese Konzepte werden an die Instanzen gekoppelt, welche die Geometrien räumlich beschreiben. In gleicher Weise lassen sich die mobilen Prozessteilnehmer 2, 3, 4, wie die verschiedenen Erntemaschinen, Traktoren, Ladewagen, Arbeitsfahrzeuge oder dergleichen beschreiben, in dem z.B. ihre CAD-Modelle für ein geometrisches Model verwendet werden, wie in den Fig. 4b und 4c dargestellt ist. Dabei wird das Umgebungsmodell in der Steuerungseinrichtung 7 zumindest eines jeden mobilen Prozessteilnehmers 2, 3, 4 vorgehalten, d.h. jeder mobile Prozessteilnehmer 2, 3, 4 hat innerhalb seiner Wissensdatenbank KB des Umgebungsmoduls UM ein Abbild der Umgebung, welches räumliche und konzeptuelle Informationen miteinander verknüpft. Dazu wird regelmäßig die Position des mobilen Prozessteilnehmers 2, 3, 4 in diesem Umgebungsmodell UM aktualisiert, indem ein Positionsortungssignal verwendet wird, um die Geometrie des mobilen Prozessteilnehmers 2, 3, 4 in dem Umgebungsmodell UM zu bewegen.

Um Prozesswissen zu generieren, werden zwei Schritte durchgeführt. Zunächst werden Operatoren im Geoinformationssystem GIS genutzt, um die räumlichen Relationen zwischen den mobilen und immobilen Prozessteilnehmern 2, 3, 4, 19, 20a, 20b, 21a, 21b, 22a, 22b zu identifizieren. So kann ein Punkt-in-Polygon Test verwendet werden, um mittels der Positionsortungssignale die Position jedes Prozessteilnehmers 2, 3, 4 in den Grenzen von Feldern 23 oder Hofstellen 18 zu verorten. Die Resultate dieser zyklisch durchgeführten Tests werden anschließend wieder semantisch gekapselt, in dem Relationen instanziiert werden.

Anschließend lassen sich diese räumlichen Relationen nutzen, um prozessbezogene Informationen zu erhalten. Hierzu werden wieder regelbasierte Analysen eingesetzt, um neues Wissen zu generieren. Dies geschieht in der Wissensdatenbank KB des Umgebungsmodells UM, woraus sich die hybride Architektur des Umgebungsmodells UM aus Geoinformationssystem GIS und Wissensdatenbank KB ergibt.

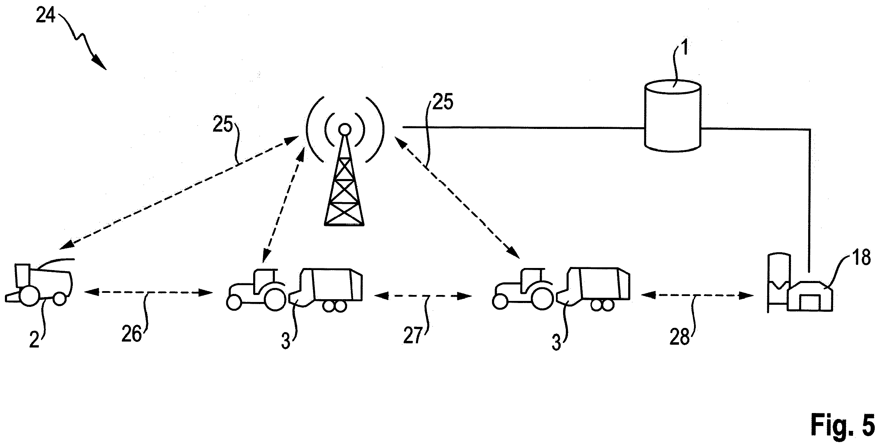

In den Fig. 4b und 4c ist jeweils eine schematische Darstellung einer räumlichen Relation zwischen einem mobilen Prozessteilnehmer 2, 3, 4 und einem immobilen Prozessteilnehmer 18, 20a, 23 gezeigt. In Fig. 4b befindet sich der als Verdichtungsfahrzeug 4 ausgeführte mobile Prozessteilnehmer auf dem Silo 20a, der Instanz Silo1, der Hofstätte 18, einem immobilen Prozessteilnehmer. In Fig. 5b wird durch eine Auswertung der Lagebeziehung zwischen einem Häcksler 2 und einem Transportfahrzeug 3 als mobile Prozessteilnehmer erkannt, ob eine Überladung räumlich möglich ist. Durch Betrachtung der zeitlichen Übergänge zwischen den Prozesszuständen zur Erkennung der Prozessereignisse hat man ein automatisches und durch Sensordaten getriebenes Prozessnachverfolgungssystem, welches direkt auf dem Prozessteilnehmer 2, 3, 4 implementiert ist.

Fig. 5 zeigt eine schematische Darstellung einer dezentralisierten Kommunikationsstruktur. Damit die am Prozess beteiligten Prozessteilnehmer 1, 2, 3, 4 untereinander und mit anderen relevanten Akteuren, wie dem Lohnunternehmer und dem Landwirt oder externen Informationsquellen, beispielsweise Wetterdienste, Verkehrsinformationsservices, etc., Daten austauschen können, wird ein Kommunikationsnetzwerk 24 benötigt, welches auch in verteilten Prozessen und in Regionen mit geringem Ausbaugrad der Kommunikationsinfrastruktur eine robuste Kommunikation ermöglicht. Die am Prozess beteiligten Prozessteilnehmer 1, 2, 3, 4 sind in der Regel mit einer Reihe von Kommunikationsschnittstellen ausgestattet. Die Kommunikationsschnittstellen ermöglichen durch die Nutzung verschiedener Mobilfunkstandards (GSM, UMTS, LTE) eine Kommunikation mittels Mobilfunkverbindungen 25. Die Kommunikationsschnittstellen bieten auch die Möglichkeit der direkten Ende-zu-Ende Verbindung, z.B. über Ad-hoc-Netze 26 oder Feldfunk 27. Ebenfalls sollen, wenn in Reichweite der mobilen Prozessteilnehmer 2, 3, 4, infrastrukturelle WLAN-Netze 28 der Hofstätte 18 genutzt werden.

Eine opportunistische Routingstrategie betrachtet die verfügbaren Kommunikationsinterfaces und bewertet diese im Hinblick auf die jeweils aktuell verfügbare Datenrate, um anschließend eine Entscheidung zu fällen, welcher Kommunikationsweg den Datentransport am besten erledigt. Diese Entscheidung wird unter Berücksichtigung der zu versendenden Daten gefällt, welche durch Quality of Service-Parameter (QoS-Parameter) verschiedenen Prioritätsklassen zugeordnet werden. D.h., dass gemäß der opportunistischen Routingstrategie nicht zwingend der schnellste Kommunikationsweg genommen wird, sondern der Kommunikationsweg, welcher der Priorisierung am besten entspricht. Ebenso wird flexibel zwischen infrastrukturbasierten und infrastrukturlosen Wegen gewechselt. Das Datenpaket wird also mit Hilfe seiner QoS-Parameter opportun versandt.

Bestandteil dieses Routings ist ebenfalls der verzögerungstolerante Transport von Daten mittels sogenannter verzögerungstoleranter Netzwerke (Delay Tolerant Network DTN). Hierfür wird die Eigenbewegung der mobilen Prozessteilnehmer 2, 3, 4 ausgenutzt, um Daten zu transportieren. Man spricht von einer Store-Carry-Forward-Strategie. Im Rahmen der Erfindung werden die Fahrpläne der Transportfahrzeuge 3 und die darin enthaltenen Ankunftszeiten verwendet, da diese eine Aussage darüber machen wann sich welche mobilen Prozessteilnehmer 3 im verzögerungstoleranten Netzwerk treffen. Zu transportierende Daten werden also an den Prozessteilnehmer 3 weitergegeben, der zum frühestmöglichen Zeitpunkt mit dem Empfänger, einem mobilen oder immobilen Prozessteilnehmer 2, 3, 4 in Kontakt kommt.

Ein solcher Ansatz bietet sich im Anwendungsfall der Silomaisernte besonders an, da die Transportfahrzeuge 3 zyklisch zwischen Feld 23 und Silo 20a pendeln und somit eine verlässliche Brücke zwischen diesen beiden Standorten bilden können. Es bietet sich also an umfassende, nicht zeitkritische Daten, wie z.B. Logfiles des CAN-Busses, nicht über das Mobilfunknetz 25 zu übertragen, sondern einem Transportfahrzeug 3 mitzugeben. Dies verzögert die Kommunikation zwar mitunter, ist aber ebenso kostengünstiger. Ähnlich kann ein auf einem verzögerungstoleranten Netzwerk basierender Ansatz Abhilfe schaffen, wenn ein Mobilfunknetz nicht verfügbar ist. So kann ein Transportfahrzeug 3 zeitkritische Daten vom Feldhäcksler 2 mitnehmen, wenn es sich auf den Rückweg zum Silo 20a macht, welche es dann per Mobilfunkt versendet, sobald es wieder in die Reichweite eines Mobilfunknetzes 25 kommt. Alternativ könnten wichtige Informationen aus dem Verdichtungsprozess, welche für den Feldhäcksler 2 bestimmt sind, von dem Verdichtungsfahrzeug 4 auf ein Transportfahrzeug 3 übertragen werden, welches bald zum Feldhäcksler 2 fährt und somit in das Funkloch, in dem sich dieser befindet.

Die Verfahren zur hybrid-opportunistischen Kommunikation sind im Kommunikationsmodul KM der Steuerungsarchitektur implementiert, die auf den einzelnen Prozessteilnehmern 2, 3, 4 die dezentrale Prozesssteuerung übernimmt.

Nach einem Aspekt des Verfahrens zur Planung und Steuerung einer logistischen Prozesskette in der Agrarwirtschaft umfasst das Verfahren die folgenden Verfahrensschritte :
- Beschreibung von Prozessschritten (9, 10) und Prozessteilnehmern (2, 3, 4, 18, 23) der logistischen Prozesskette mittels eines maschinenlesbaren semantischen Datenmodells (PM),
- Generierung von Regeln zur Klassifizierung von Prozessteilnehmern (2, 3, 4, 18, 23) und durchzuführender Prozessschritte (9, 10) anhand des maschinenlesbaren semantischen Datenmodells (PM),
- Beschreibung von Relationen zwischen einem Prozessschritt (9, 10) und einem Prozessteilnehmer (2, 3, 4, 18, 23) mittels des maschinenlesbaren semantischen Datenmodells (PM),
- kontinuierliche Bestimmung und Auswertung von Prozessdaten der Prozessteilnehmer (2, 3, 4, 18, 23), welche zu einer auf dem maschinenlesbaren semantischen Datenmodell (PM) basierenden automatisierten regelbasierenden Inferenz (IM) auf einen durch einen Prozessteilnehmer (2, 3, 4) durchzuführenden abweichenden Prozessschritt verwendet werden.

Weitere Aspekte des Verfahrens zur Planung und Steuerung einer logistischen Prozesskette in der Agrarwirtschaft ergeben sich dann, wenn von den Prozessteilnehmern (2, 3, 4, 18, 23) bestimmte eigene Prozessdaten an andere Prozessteilnehmer (2, 3, 4, 18, 23) übermittelt werden und/oder der Verfahrensschritt der regelbasierenden Inferenz dezentral durchgeführt wird und/oder der von einem Prozessteilnehmer (2, 3, 4, 18, 23) durchzuführende abweichende Prozessschritt mit anderen Prozessteilnehmern (2, 3, 4, 18, 23) abgestimmt wird.

Weitere Aspekte des Verfahrens zur Planung und Steuerung einer logistischen Prozesskette in der Agrarwirtschaft ergeben sich dann, wenn ein zweites semantisches Datenmodel (UM) mit von den Prozessteilnehmern (2, 3, 4, 18, 23) erfassten Umgebungsdaten zur Erkennung von Prozesszuständen verknüpft wird und/oder das zweite semantische Datenmodel (UM) mit den Prozessteilnehmern (2, 3, 4, 18, 23) zugeordneten georeferenzierten Daten verknüpft wird, wobei dem semantischen Datenmodell (UM) räumliche Relationen von Prozessteilnehmern (2, 3, 4, 18, 23) durch geometrische Analyse zur Verfügung gestellt werden.

Weitere Aspekte des Verfahrens zur Planung und Steuerung einer logistischen Prozesskette in der Agrarwirtschaft ergeben sich dann, wenn zur Kommunikation der Prozessteilnehmer (2, 3, 4, 18, 23) untereinander eine opportunistische Routingstrategie verwendet wird und/oder die Kommunikation der Prozessteilnehmer (2, 3, 4, 18, 23) untereinander zumindest teilweise verzögerungstolerant durchgeführt wird.

Weitere Aspekte des Verfahrens zur Planung und Steuerung einer logistischen Prozesskette in der Agrarwirtschaft ergeben sich dann, wenn die Steuerungseinrichtung (7) mehrere, mittels unterschiedlicher Kommunikationsprotokolle kommunizierende, Schnittstellen aufweist und/oder die Steuerungseinrichtung (7) ein Simulationsmodul (SM), ein Kommunikationsmodul (KM) und ein Inferenzmodul (IM) umfasst, welche mit zumindest einer Datenbank (KB) in Verbindung stehen, die mittels eines maschinenlesbaren semantischen Datenmodells (PM, UM) ein Prozessmodell bzw. eine Prozessumgebung des jeweiligen Prozessteilnehmers (2, 3, 4, 18, 23) abbildet und/oder Anspruch 12, dadurch gekennzeichnet, dass die Steuerungseinrichtung (7) zur kontinuierlichen Aktualisierung der Inhalte der zumindest einen Datenbank (KB) eingerichtet ist.

**Bezugszeichenliste**

| | | | |
|---|---|---|---|
| 1 | Planungssystem | 28 | W-LAN |
| 2 | Prozessteilnehmer | | |
| 3 | Prozessteilnehmer | 100 | Dispositionssystem |
| 4 | Prozessteilnehmer | 101 | Prozessteilnehmer |
| 5 | Kommunikationsmedium | 102 | Prozessteilnehmer |
| 6 | Kommunikationsmedium | 103 | Prozessteilnehmer |
| 7 | Steuerungseinrichtung | 104 | Kommunikationsmedium |
| 8 | Gesamtauftrag | | |
| 9 | Unterauftrag | GIS | Geoinformationssystem |
| 10 | Unterauftrag | IM | Inferenzmodul |
| 11 | Teilauftrag | KB | Wissensdatenbank |
| 12 | Teilauftrag | KM | Kommunikationsmodul |
| 13 | Teilauftrag | SM | Simulationsmodul |
| 14 | Teilauftrag | PM | Prozessmodul |
| 15 | Teilauftrag | UM | Umgebungsmodul |
| 16 | Teilauftrag | | |
| 17 | Steuerungsarchitektur | | |
| 18 | Hofstätte | | |
| 19 | Grundfläche von 18 | | |
| 20a | Silo | | |
| 20b | Silo | | |
| 21a | Silovorplatz | | |
| 21b | Silovorplatz | | |
| 22a | Maschinenhalle | | |
| 22b | Maschinenhalle | | |
| 23 | Feld | | |
| 24 | Kommunikationsnetzwerk | | |
| 25 | Mobilfunknetz | | |
| 26 | Ad-Hoc-Netz | | |
| 27 | Feldfunk | | |

## Patentansprüche

1. Verfahren zur Planung und Steuerung einer logistischen Prozesskette in der Agrarwirtschaft zumindest ein zentrales Planungssystem (1) und Prozessteilnehmer (2, 3, 4) umfassend und wobei den Prozessteilnehmern (2, 3, 4) jeweils eine Steuerungseinrichtung (7) zugeordnet ist, **gekennzeichnet durch** folgende Verfahrensschritte:
- Definition eines abstrakten Modells der Prozesskette, wobei die Prozesskette in Teilprozesse untergliedert wird und Teilaufträge (11-16) für die Prozessteilnehmer (2, 3, 4) abgeleitet werden (abschnitt 0032 Z.13)
- die Teilaufträge (11-16) werden von den Prozessteilnehmern (2, 3, 4) bearbeitet, wobei die Teilaufträge an die jeweilige, dem Prozessteilnehmer (2, 3, 4) zugeordnete Steuerungseinrichtung (7) übermittelt werden,
- wobei jede Steuerungseinrichtung (7) eine Steuerarchitektur (17) umfasst, wobei jede Steuerarchitektur (17) interagierende Komponenten umfasst und die interagierenden Komponenten maschinenlesbare semantische Datenmodelle (PM) umfassen,
- wobei die maschinenlesbaren semantischen Datenmodelle (PM) Prozessschritte (9, 10) und die Prozessteilnehmer (2, 3, 4, 18, 23) der logistischen Prozesskette beschreiben,
- wobei Regeln zur Klassifizierung von Prozessteilnehmern (2, 3, 4, 18, 23) und durchzuführender Prozessschritte (9, 10) anhand des maschinenlesbaren semantischen Datenmodells (PM) generiert werden,
- Relationen zwischen einem Prozessschritt (9, 10) und einem Prozessteilnehmer (2, 3, 4, 18, 23) mittels des maschinenlesbaren semantischen Datenmodells (PM) beschrieben werden,
- kontinuierliche Bestimmung und Auswertung von Prozessdaten der Prozessteilnehmer (2, 3, 4, 18, 23), welche zu einer auf dem maschinenlesbaren semantischen Datenmodell (PM) basierenden automatisierten regelbasierenden Inferenz (IM) auf einen durch einen Prozessteilnehmer (2, 3, 4) durchzuführenden abweichenden Prozessschritt verwendet werden.

2. Verfahren nach Anspruch 1,
**dadurch gekennzeichnet, dass**
die Handlungsplanung eines Prozessteilnehmers (2, 3, 4) oder eines kooperativen Verbandes von Prozessteilnehmern (2, 3, 4) dezentral realisiert wird und die jeweilige Steuerungseinrichtung (7) eingerichtet ist, nach einem Steuerzyklus zu arbeiten.

3. Verfahren nach Anspruch 2,
**dadurch gekennzeichnet, dass**
der jeweilige Steuerzyklus fünf Schritte umfasst, nämlich
einen ersten Schritt in welchem der Steuerungsablauf auf der jeweiligen Steuerungseinrichtung (7) analysiert wird,
einen zweiten Schritt in welchem mögliche Änderungsszenarien aus dem Prozessmodell (PM) extrahiert werden,
einen dritten Schritt in welchem die Änderungsszenarien an ein ereignisdiskretes Simulationssystem (SM) übergeben werden,
einen vierten Schritt in welchem die Simulation der Änderungsszenarien bewertet und ein Referenzszenario gewählt wird,
einen fünften Schritt in welchem aus dem gewählten Referenzszenario Änderungen an bestehenden Teilaufträgen (11-16) oder neu zu vergebende Teilaufträge (11-16) identifiziert und in der jeweiligen Steuereinrichtung (7) hinterlegt werden.

4. Verfahren nach einem der vorhergehenden Ansprüche, **dadurch gekennzeichnet, dass** von den Prozessteilnehmern (2, 3, 4, 18, 23) bestimmte eigene Prozessdaten an andere Prozessteilnehmer (2, 3, 4, 18, 23) übermittelt werden.

5. Verfahren nach Anspruch 1, **dadurch gekennzeichnet, dass** der Verfahrensschritt der regelbasierenden Inferenz dezentral durchgeführt wird.

6. Verfahren nach einem der Ansprüche 1 bis 5, **dadurch gekennzeichnet, dass** der von einem Prozessteilnehmer (2, 3, 4, 18, 23) durchzuführende abweichende Prozessschritt mit anderen Prozessteilnehmern (2, 3, 4, 18, 23) abgestimmt wird.

7. Verfahren nach einem der Ansprüche 1 bis 6, **dadurch gekennzeichnet, dass** ein zweites semantisches Datenmodel (UM) mit von den Prozessteilnehmern (2, 3, 4, 18, 23) erfassten Umgebungsdaten zur Erkennung von Prozesszuständen verknüpft wird.

8. Verfahren nach einem der Ansprüche 1 bis 7, **dadurch gekennzeichnet, dass** das zweite semantische Datenmodel (UM) mit den Prozessteilnehmern (2, 3, 4, 18, 23) zugeordneten georeferenzierten Daten verknüpft wird.

9. Verfahren nach Anspruch 8, **dadurch gekennzeichnet, dass** dem semantischen Datenmodell (UM) räumliche Relationen von Prozessteilnehmern (2, 3, 4, 18, 23) durch geometrische Analyse zur Verfügung gestellt werden.

10. Verfahren nach einem der Ansprüche 1 bis 9, **dadurch gekennzeichnet, dass** zur Kommunikation der Prozessteilnehmer (2, 3, 4, 18, 23) untereinander eine opportunistische Routingstrategie verwendet wird.

11. Verfahren nach einem der Anspruch 10, **dadurch gekennzeichnet, dass** die Kommunikation der Prozessteilnehmer (2, 3, 4, 18, 23) untereinander zumindest teilweise verzögerungstolerant durchgeführt wird.

12. Steuerungseinrichtung (7), die zur Durchführung eines Verfahrens zur Planung und Steuerung einer logistischen Prozesskette in der Agrarwirtschaft nach einem der Ansprüche 1 bis 11 eingerichtet ist.

13. Steuerungseinrichtung (7) nach Anspruch 12, **dadurch gekennzeichnet, dass** die Steuerungseinrichtung (7) mehrere, mittels unterschiedlicher Kommunikationsprotokolle kommunizierende, Schnittstellen aufweist.

14. Steuerungseinrichtung (7) nach Anspruch 12 oder 13, **dadurch gekennzeichnet, dass** die Steuerungseinrichtung (7) ein Simulationsmodul (SM), ein Kommunikationsmodul (KM) und ein Inferenzmodul (IM) umfasst, welche mit zumindest einer Datenbank (KB) in Verbindung stehen, die mittels eines maschinenlesbaren semantischen Datenmodells (PM, UM) ein Prozessmodell bzw. eine Prozessumgebung des jeweiligen Prozessteilnehmers (2, 3, 4, 18, 23) abbildet.

15. Steuerungseinrichtung (7) nach Anspruch 14, **dadurch gekennzeichnet, dass** die Steuerungseinrichtung (7) zur kontinuierlichen Aktualisierung der Inhalte der zumindest einen Datenbank (KB) eingerichtet ist.
